# EUROPEAN PATENT APPLICATION

(11) **EP 1 078 952 A1**
(43) Date of publication of application: **28.02.2001**
(21) Application number: 99116923.6
(22) Date of filing: 27.08.1999
(51) Int. Cl.: C08K 9/02, C08L 21/00, C09C 1/56

(54) **Elastomeric compositions incorporating rare earth-treated carbon black**

(71) Applicant: Degussa-Hüls Aktiengesellschaft, 60287 Frankfurt am Main (DE)
(72) Inventor: Arndt, Jörg, 53881 Euskirchen (DE); Bergemann, Klaus, 63526 Erlensee (DE); Niedermeier, Werner, 50321 Brühl (DE); Otto, Karin, 44333 Fairlawn, OH (US); Vogel, Karl, 63755 Alzenau-Michelbach (DE)

(57) **Abstract**

An aggregate comprising a carbon phase and at least one rare earths-containing species phase. This aggregates are used in elastomeric compounds.

## Description

The present invention relates to novel aggregates and elastomeric compounds. More particularly, the present invention relates to rare earths-containing carbon blacks and elastomeric compounds incorporating rare earths-containing carbon blacks, such as cerium-treated or lanthanum-treated carbon blacks, and products manufactured from such compounds.

Carbon blacks are widely used as pigments, fillers and reinforcing agents in the compounding and preparation of rubber and other elastomeric compounds. Carbon blacks are particularly useful as reinforcing agents in the preparation of elastomeric compounds used in the manufacture of tires.

Carbon blacks are generally produced in a furnace-type reactor by pyrolyzing a hydrocarbon feedstock with hot combustion gases to produce combustion products containing particulate carbon black. Carbon black exists in the form of aggregates. The aggregates, in turn are formed of carbon black particles. However, carbon black particles do not generally exist independently of the carbon black aggregate. Carbon blacks are generally characterized on the basis of analytical properties, including, but not limited to particle size and specific surface area; aggregate size, shape, and distribution; and chemical and physical properties of the surface. The properties of carbon blacks are analytically determined by tests known to the art. For example, nitrogen adsorption surface area (measured by ASTM test procedure D3037-Method A) and cetyl-trimethyl ammonium bromide adsorption value (CTAB) (measured by ASTM test procedure D3765 (09.01), are measures of specific surface area. Dibutylphthalate absorption of the crushed (CDBP) (measured by ASTM test procedure D3493-86) and uncrushed (DBP) carbon black (measured by ASTM test procedure D2414-93), relates to the aggregate structure. The bound rubber value relates to the surface activity of the carbon black. The properties of a given carbon black depend upon the conditions of manufacture and may be modified, e.g., by altering temperature, pressure, feedstock, residence time, quench temperature, throughput, and other parameters.

It is generally desirable in the production of tires to employ carbon black-containing compounds when constructing the tread and other portions of the tire. For example, a suitable tread compound will employ an elastomer compounded to provide high abrasion resistance and good hysteresis balance at different temperatures. A tire having high abrasion resistance is desirable because abrasion resistance is proportional to tire life. The physical properties of the carbon black directly influence the abrasion resistance and hysteresis of the tread compound. Generally, a carbon black with a high surface area and small particle size will impart a high abrasion resistance and high hysteresis to the tread compound. Carbon black loading also affects the abrasion resistance of the elastomeric compounds. Abrasion resistance increases with increased loading, at least to an optimum point, beyond which abrasion resistance actually decreases.

The hysteresis of an elastomeric compound relates to the energy dissipated under cyclic deformation. In other words, the hysteresis of an elastomeric composition relates to the difference between the energy applied to deform the elastomeric composition and the energy released as the elastomeric composition recovers to its initial undeformed state. Hysteresis is characterized by a loss tangent, tan δ, which is a ratio of the loss modulus to the storage modulus (that is, viscous modulus to elastic modulus). Tires made with a tire tread compound having a lower hysteresis measured at higher temperatures, such as 40°C or higher, will have reduced rolling resistance, which in turn, results in reduced fuel consumption by the vehicle using the tire. At the same time, a tire tread with a higher hysteresis value measured at low temperature, such as 0°C or lower, will result in a tire with high wet traction and skid resistance which will increase driving safety. Thus, a tire tread compound demonstrating low hysteresis at high temperatures and high hysteresis at low temperatures can be said to have a good hysteresis balance.

There are many other applications where it is useful to provide an elastomer exhibiting a good hysteresis balance but where the abrasion resistance is not an important factor. Such applications include but are not limited to tire components such as undertread, wedge compounds, sidewall, carcass, apex, bead filler and wire skim; engine mounts; and base compounds used in industrial drive and automotive belts.

Silica is also used as a reinforcing agent (or filler) for elastomers. However, using silica alone as a reinforcing agent for elastomer leads to poor performance compared to the results obtained with carbon black alone as the reinforcing agent. It is theorized that strong filler-filler interaction and poor filler-elastomer interaction accounts for the poor performance of silica. The silica-elastomer interaction can be improved by chemically bonding the two with a chemical coupling agent, such as bis (3-triethoxysilylpropyl)tetra-sulfane, commercially available as Si-69 from Degussa AG, Germany. Coupling agents such as Si-69 create a chemical linkage between the elastomer and the silica, thereby coupling the silica to the elastomer.

When the silica is chemically coupled to the elastomer, certain performance characteristics of the resulting elastomeric composition are enhanced. When incorporated into vehicle tires, such elastomeric compounds provide improved hysteresis balance.

When carbon black alone is used as a reinforcing agent in elastomeric compositions, it does not chemically couple to the elastomer but the carbon black surface provides many sites for interacting with the elastomer. While the use of a coupling agent with carbon black might provide some improvement in performance to an elastomeric composition, the improvement is not comparable to that obtained when using a coupling agent with silica.

It has been established that the hysteresis of filled compounds is mainly related to the filler network formed in the polymer matrix which causes high hysteresis at high temperature and low hysteresis at low temperature. This is undesirable for tire applications. The main factor to control filler networking is the filler-filler interaction.

It is an object of the present invention to provide filler compounds which can be incorporated into elastomeric compounds. Particularly, it is an object to provide an elastomeric compound incorporating rare earths-treated carbon blacks, such as cerium-treated or lanthanum-treated carbon blacks. It is yet another object of the present invention to provide an elastomeric compound incorporating rare earths-treated carbon blacks, wherein the carbon black may be efficiently coupled to the elastomer with a coupling agent. Such a carbon black may be employed for example, in tire compounds, industrial rubber products and other rubber goods. It is a further object of the present invention to provide rare earths-treated carbon black/elastomeric formulations using a variety of elastomers useful in a variety of product applications.

Additional features and advantages of the present invention will be set forth in part in the description which follows, and in part will be apparent from the description, or may be learned by the practice of the present invention. The objectives and other advantages of the present invention may be realized and obtained by means of the elements and combinations particularly pointed out in the written description and the claims.

To achieve these and other advantages, and in accordance with the purpose of the present invention, as embodied and broadly described herein, the present invention relates to rare earths-treated carbon blacks which are aggregates containing at least a carbon phase and a rare earths-containing species phase. The present invention is also directed to an elastomeric compound including an elastomer and a rare earths-treated carbon black, and optionally including a coupling agent. A variety of elastomers and formulations employing such elastomers are contemplated and disclosed. Elastomeric compounds incorporating an elastomer and a rare earths-treated carbon black are also disclosed. Also disclosed are methods for preparing elastomeric compounds with the rare earths-treated carbon blacks and products manufactured from such compounds.

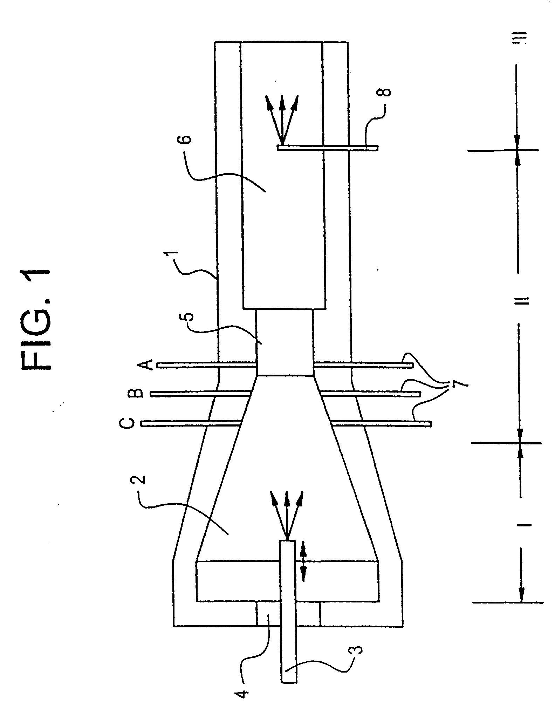

Fig. 1 is a schematic view of a portion of one type of carbon black reactor which may be used to produce the treated carbon blacks of the present invention.

The present invention relates to rare earths-treated carbon blacks. These rare earths-treated carbon blacks can be incorporated into elastomeric compounds for a variety of uses, such as tire applications. The rare earths-treated carbon blacks are aggregates containing at least a carbon phase and a rare earths-containing species phase. The rare earths-containing species include compounds containing scandium, yttrium, lanthanum, cerium, praseodymium, promethium, samarium, europium, gadolinium, terbium, dysprosium, holmium, erbium, thulium, ytterbium, lutetium. Preferably, the rare earths-containing species phase is an cerium- or lanthanum-containing species phase. The rare earths-containing species include, but are not limited to, oxides of rare earths metals. The rare earths-containing species phase can be distributed through at least a portion of the aggregate and is an intrinsic part of the aggregate. These rare earths-treated carbon blacks may be incorporated into elastomeric compounds and can lead to desirable properties by compounding an elastomer with a rare earths-treated carbon black.

Rare earths-treated carbon black aggregates do not represent a mixture of discrete carbon black aggregates and discrete metal-containing aggregates. Rather, the rare earths-treated carbon black aggregates of the present invention include at least one rare earths-containing region concentrated at or near the surface of the aggregate (but part of the aggregate) or within the aggregate. Thus, as stated earlier, the rare earths-treated carbon black aggregates can be described as aggregates comprising a carbon phase and a rare earths-containing species phase. The aggregates thus contain at least two phases, one of which is carbon and the other of which is a rare earths-containing species. The rare earths-containing species phase that is part of the aggregate is not attached to a carbon black aggregate like a silane coupling agent, but actually is part of the same aggregate as the carbon phase. Further, it is within the bounds of the present invention to have a rare earths-treated carbon black containing more than one type of a rare earths-containing species phase or the rare earths-treated carbon black can also contain a silicon-containing species phase and/or a boron-containing species phase. For example, the rare earths-treated carbon black of the present invention can have an aggregate comprising a carbon phase, an cerium-containing species phase, and a lanthanum-containing species phase. Accordingly, the rare earths-treated carbon black of the present invention can have two or more different types of rare earths-containing species phases and/or additional non-metal species phases.

As indicated above, the aggregate of the present invention can additionally contain a silicon-containing species phase as described in U.S. Patent Applications Serial Nos. 08/446,141; 08/446,142; 08/528,895; and 08/750,017, and PCT Published Application No. WO 96/37547, all incorporated in their entireties by reference.

Such carbon blacks are preferably produced in a furnace carbon black reactor as depicted in Figure 1.

In the furnace carbon black process the oxidative pyrolysis of the carbon black feedstocks is carried out in a reactor lined with refractory materials. In such a reactor three zones may be distinguished, which are arranged in line, one after the other, along the axis of the reactor and have the reaction media flow through them one after the other.

The first zone, the so-called combustion zone, essentially comprises the combustion chamber of the reactor. Here a hot process gas is produced through the burning of a fuel, as a rule a hydrocarbon, with a surplus of preheated combustion air or other gases containing oxygen. Today natural gas is used for the most part, but liquid hydrocarbons such as light and heavy heating oil can also be used. The combustion of the fuel usually takes place with a surplus of oxygen. The air surplus here promotes the complete conversion of the fuel and serves to control the carbon black quality. The fuel is usually fed into the combustion chamber by means of one or more burner lances.

In the second zone of the carbon black reactor, the so-called reaction zone or pyrolysis zone, carbon black formation takes place. For this purpose the carbon black feedstock, in general a so-called carbon black oil, is injected into the stream of the hot process gas and mixed with it. In relation to the quantity of incompletely converted oxygen in the combustion zone, the quantity of hydrocarbons in the reaction zone is in surplus. Hence the formation of carbon black normally sets in here.

Carbon black oil may be injected into the reactor in various ways. For example, an axial oil injection lance or one or more radial oil lances that are arranged on the circumference of the reactor in a plane perpendicular to the direction of flow are suitable. A reactor may have several planes with radial oil lances along the direction of the flow. At the end of the oil lances there are spray nozzles with which the carbon black oil is mixed into the stream of the process gas.

When carbon black oil and gaseous hydrocarbons, such as methane, for example, are used simultaneously as carbon black feedstock, the gaseous hydrocarbons can be injected into the stream of the hot off-gas separately from the carbon black oil by a special set of gas lances.

In the third zone of the carbon black reactor, the so-called separation zone (quench zone), the formation of carbon black is interrupted through the rapid cooling of the process gas containing carbon black. Through this, unwanted after-reactions are avoided. Such after-reactions lead to porous carbon blacks. The cessation of the reaction is generally achieved through spraying in water by means of appropriate spray nozzles. Generally the carbon black reactor has several places along the reactor for spraying in water or quenching, so that the time that the carbon black stays in the reaction zone may be varied. The residual heat of the process gas is utilized in an attached heat exchanger to preheat the combustion air and the carbon black oil.

The rare earths-treated carbon blacks of the present invention may be made by introducing a volatilizable rare earths-containing compound into the carbon black reactor at a point upstream and / or downstream of the quench zone and / or in the quench zone. Useful volatilizable compounds (i.e., the rare earths-containing compounds) include any compound, which is volatilizable at carbon black reactor temperatures. Examples include volatilizable or decomposible compounds containing, scandium, yttrium, lanthanum, cerium, praseodymium, promethium, samarium, europium, gadolinium, terbium, dysprosium, holmium, erbium, thulium, ytterbium, lutetium and the like. The flow rate of the volatilizable compound will determine the weight percent of rare earths in the treated carbon black. The weight percent of the elemental rare earths (e.g. elemental cerium ore lanthanum) in the treated carbon black generally ranges from about 0.1 % to 25 %, by weight of the aggregate, but may be adjusted to any desired level, such as up to 50% by weight, greater than 50 % by weight, or up to 99 % by weight of the aggregate.

The volatilizable compound may be premixed with the carbon black-forming feedstock and introduced with the feedstock into the reaction zone. Alternatively, the volatilizable compound may be introduced to the reaction zone separately from the feedstock injection point. Such introduction may be upstream or downstream from the feedstock injection point, provided the volatilizable compound is introduced upstream and / or downstream from the quench zone and / or in the quench zone. Upon volatilization and exposure to high temperatures in the reactor, the compound decomposes, and reacts with other species in the reaction zone, yielding rare earths-treated carbon black, such that the rare earths, or rare earths-containing species, becomes an intrinsic part of the carbon black.

Besides volatalizable compounds, decomposible rare earths-containing compounds which are not necessarily volatilizable can also be used to yield the rare earths-treated carbon black.

As discussed in further detail below, if the volatilizable compound is introduced substantially simultaneously with the feedstock, the rare earths -treated regions are distributed throughout at least a portion of the carbon black aggregate.

In a second embodiment of the present invention, the volatilizable compound is introduced to the reaction zone at a point after carbon black formation has commenced but before the reaction stream has been subjected to the quench. In this embodiment, rare earths-treated carbon black aggregates are obtained in which the rare earths-containing species phase is concentrated primarily at or near the surface of the aggregate.

It has been found by the present inventors that the elastomeric compounds incorporating a rare earths-treated carbon black may be additionally compounded with one or more coupling agents to further enhance the properties of the elastomeric compound. Coupling agents, as used herein, include, but are not limited to, compounds that are capable of coupling fillers such as carbon black or silica to an elastomer. Coupling agents useful for coupling silica or carbon black to an elastomer, are expected to be useful with the rare earths-treated carbon blacks. Useful coupling agents include, but are not limited to, silane coupling agents such as bis(3-triethoxysilylpropyl)tetrasulfane (Si-69), 3-thiocyanatopropyl-triethoxy silane (Si-264, from Degussa AG, Germany), g-mercaptopropyl-trimethoxy silane (A189, from Union Carbide Corp., Danbury, Connecticut); zirconate coupling agents, such as zirconium dineoalkanolatodi(3-mercapto) propionato-O (NZ 66A, from Kenrich Petrochemicals, Inc., of Bayonne, New Jersey); titanate coupling agents; nitro coupling agents such as N,N'-bis(2-methyl-2-nitropropyl)-1,6-diaminohexane (Sumifine 1162, from Sumitomo Chemical Co., Japan); and mixtures of any of the foregoing. The coupling agents may be provided as a mixture with a suitable carrier, for example X50-S which is a mixture of Si-69 and N330 carbon black, available from Degussa-Hüls AG.

The rare earths-treated carbon black may also be modified to have at least one organic group attached to the metal-treated carbon black. Alternatively, or in addition, a mixture of rare earths-treated carbon black and a modified carbon black having at least one attached organic group may be used. In addition, it is within the bounds of the present invention to use a mixture of two or more types of rare earths-treated carbon black in the elastomeric compositions of the present invention.

Methods for attaching organic groups to carbon black and a further discussion of the types of organic groups that can be attached can be found in U.S. Patent Application Serial Nos. 08/356,660; 08/572,525; and 08/356,459, now U.S. Patent No. 5,559,169; and PCT Published Applications Nos. WO 96/18688 and WO 96/18696, the disclosures of which are fully incorporated by reference herein.

One process for attaching an organic group to the carbon black involves the reaction of at least one diazonium salt with a carbon black in the absence of an externally applied current sufficient to reduce the dazonium salt. That is, the reacton between the diazonium salt and the carbon black proceeds without an external source of electrons sufficient to reduce the diazonium salt. Mixtures of different diazonium salts may be used in the process of the invention. This process can be carried out under a variety of reaction conditions and in any type of reaction medium, including both protic and aprotic solvent systems or slurries.

In another process, at least one diazonium salt reacts with a carbon black in a protic reaction medium. Mixtures of different diazonium salts may be used in this process of the invention. This process can also be carried out under a variety of reaction conditions.

Preferably, in both processes, the diazonium salt is formed in situ. If desired, in either process, the carbon black product can be isolated and dried by means known in the art. Furthermore, the resultant carbon black product can be treated to remove impurities by known techniques. The various preferred embodiments of these processes are discussed below.

These processes can be carried out under a wide variety of conditions and in general are not limited by any particular condition. The reaction conditions must be such that the particular diazonium salt is sufficiently stable to allow it to react with the carbon black. Thus, the processes can be carried out under reaction conditions where the diazonium salt is short lived. The reaction between the diazonium salt and the carbon black occurs, for example, over a wide range of pH and temperature. The processes can be carried out at acidic, neutral, and basic pH. Preferably, the pH ranges from about 1 to 9. The reaction temperature may preferably range from 0°C to 100°C.

Diazonium salts, as known in the art, may be formed for example by the reaction of primary amines with aqueous solutions of nitrous acid. A general discussion of diazonium salts and methods for their preparation is found in Morrison and Boyd, Organic Chemistry, 5^{th} Ed., pp. 973-983, (Allyn and Bacon, Inc. 1987) and March, Advanced Organic Chemistry; Reactions, Mechanisms, and Structures, 4th Ed., (Wiley, 1992). According to this invention, a diazonium salt is an organic compound having one or more diazonium groups.

The diazonium salt may be prepared prior to reaction with the carbon black or, more preferably, generated in situ using techniques known in the art. In situ generation also allows the use or unstable diazonium salts such as alkyl diazonium salts and avoids unnecessary handling or manipulation of the diazonium salts. In particularly preferred processes, both the nitrous acid and the diazonium salt are generated in situ.

A diazonium salt, as is known in the art, may be generated by reacting a primary amine, a nitrite and an acid. The nitrite may be any metal nitrite, preferably lithium nitrite, sodium nitrite, potassium nitrite, or zinc nitrite, or any organic nitrite such as for example isoamylnitrite or ethylnitrite. The acid may be any acid, inorganic or organic, which is effective in the generation of the diazonium salt. Preferred acids include nitric acid, HNO₃, hydrochloric acid, HCl, and sulfuric acid, H₂SO₄.

The diazonium salt may also be generated by reacting the primary amine with an aqueous solution of nitrogen dioxide. The aqueous solution of nitrogen dioxide, NO₂/H₂O, provides the nitrous acid needed to generate the diazonium salt.

Generating the diazonium salt in the presence of excess HCl may be less preferred than other alternatives because HCl is corrosive to stainless steel. Generation of the diazonium salt with NO₂/H₂O has the additional advantage of being less corrosive to stainless steel or other metals commonly used for reaction vessels. Generation using H₂SO₄/NaNO₂ or HNO₃/NaNO₂ are also relatively non-corrosive.

In general, generating a diazonium salt from a primary amine, a nitrite, and an acid requires two equivalents of acid based on the amount of amine used. In an in situ process, the diazonium salt can be generated using one equivalent of the acid. When the primary amine contains a strong acid group, adding a separate acid may not be necessary. The acid group or groups of the primary amine can supply one or both of the needed equivalents of acid. When the primary amine contains a strong acid group, preferably either no additional acid or up to one equivalent of additional acid is added to a process of the invention to generate the diazonium salt in situ. A slight excess of additional acid may be used. One example of such a primary amine is para-aminobenzenesulfonic acid (sulfanilic acid).

In general, diazonium salts are thermally unstable. They are typically prepared in solution at low temperatures, such as 0-5°C, and used without isolation of the salt. Heating solutions of some diazonium salts may liberate nitrogen and form either the corresponding alcohols in acidic media or the organic free radicals in basic media.

However, the diazonium salt need only be sufficiently stable to allow reaction with the carbon black. Thus, the process can be carried out with some diazonium salts otherwise considered to be unstable and subject to decomposition. Some decomposition processes may compete with the reaction between the carbon black and the diazonium salt and may reduce the total number of organic groups attached to the carbon black. Further, the reaction may be carried out at elevated temperatures where many diazonium salts may be susceptible to decomposition. Elevated temperatures may also advantageously increase the solubility of the diazonium salt in the reaction medium and improve its handling during the process. However, elevated temperatures may result in some loss of the diazonium salt due to other decomposition processes.

Reagents can be added to form the diazonium salt in situ, to a suspension of carbon black in the reaction medium, for example, water. Thus, a carbon black suspension to be used may already contain one for more reagents to generate the diazonium salt and the process accomplished by adding the remaining reagents.

Reactions to form a diazonium salt are compatible with a large variety of functional groups commonly found on organic compounds. Thus, only the availability of a diazonium salt for reaction with a carbon black limits the processes of the invention.

The processes can be carried out in any reaction medium which allows the reaction between the diazonium salt and the carbon black to proceed. Preferably, the reaction medium is a solvent-based system. The solvent may be a protic solvent, an aprotic solvent, or a mixture of solvents. Protic solvents are solvents, like water or methanol, containing a hydrogen attached to an oxygen or nitrogen and thus are sufficiently acidic to form hydrogen bonds. Aprotic solvents are solvents which do not contain an acidic hydrogen as defined above. Aprotic solvents include, for example, solvents such as hexanes, tetrahydrofuran (THF), acetonitrile, and benzonitrile. For a discussion of protic and aprotic solvents see Morrison and Boyd, Organic Chemistry, 5^{th} Ed., pp. 228-231, (Allyn and Bacon, Inc. 1987).

The processes are preferably carried out in a protic reaction medium, that is, in a protic solvent alone or a mixture of solvents which contains at least one protic solvent. Preferred protic media include, but are not limited to water, aqueous media containing water and other solvents, alcohols, and any media containing an alcohol, or mixtures of such media.

The reaction between a diazonium salt and a carbon black can take place with any type of carbon black, for example, in fluffy or pelleted form. In one embodiment designed to reduce production costs, the reaction occurs during a process for forming carbon black pellets. For example, a carbon black product of the invention can be prepared in a dry drum by spraying a solution or slurry of a diazonium salt onto a carbon black. Alternatively, the carbon black product can be prepared by pelletizing a carbon black in the presence of a solvent system, such as water, containing the diazonium salt or the reagents to generate the diazonium salt in situ. Aqueous solvent systems are preferred. Accordingly, another embodiment provides a process for forming a pelletized carbon black comprising the steps of: introducing a carbon black and an aqueous slurry or solution of a diazonium salt into a pelletizer, reacting the diazonium salt with the carbon black to attach an organic group to the carbon black, and pelletizing the resulting carbon black having an attached organic group. The pelletized carbon black product may then be dried using conventional techniques.

In general, the processes produce inorganic by-products, such as salts. In some end uses, such as those discussed below, these by-products may be undesirable. Several possible ways to produce a carbon black product without unwanted inorganic by-products or salts are as follows:

First, the diazonium salt can be purified before use by removing the unwanted inorganic by-product using means known in the art. Second, the diazonium salt can be generated with the use of an organic nitrite as the diazotiazation agent yielding the corresponding alcohol rather than an inorganic salt. Third, when the diazonium salt is generated from an amine having an acid group and aqueous NO₂, no inorganic salts are formed. Other ways may be known to those of skill in the art.

In addition to the inorganic by-products, a process may also produce organic by-products. They can be removed, for example, by extraction with organic solvents. Other ways of obtaining products without unwanted organic by-products may be known to those of skill in the art and include washing or removal of ions by reverse osmosis.

The reaction between a diazonium salt and a carbon black forms a carbon black product having an organic group attached to the carbon black. The diazonium salt may contain the organic group to be attached to the carbon black. It may be possible to produce the carbon black products of this invention by other means known to those skilled in the art.

The organic group may be an aliphatic group, a cyclic organic group, or an organic compound having an aliphatic portion and a cyclic portion. As discussed above, the diazonium salt employed in the processes can be derived from a primary amine having one of these groups and being capable of forming, even transiently, a diazonium salt. The organic group may be substituted or unsubstituted, branched or unbranched. Aliphatic groups include, for example, groups derived from alkanes, alkenes, alcohols, ethers, aldehydes, ketones, carboxylic acids, and carbohydrates. Cyclic organic groups include, but are not limited to, alicyclic hydrocarbon groups (for example, cycloalkyls, cycloalkenyls), heterocyclic hydocarbon groups (for example, pyrrolidinyl, pyrrolinyl, piperidinyl, morpholinyl, and the like), aryl groups (for example, phenyl, naphthyl, anthracenyl, and the like), and heteroaryl groups (imidazolyl, pyrazolyl, pyridinyl, thienyl, thiazolyl, furyl, indolyl, and the like). As the stearic hindrance of a substituted organic group increases, the number of organic groups attached to the carbon black from the reaction between the diazonium salt and the carbon black may be diminished.

When the organic group is substituted, it may contain any functional group compatible with the formation of a diazonium salt. Preferred functional groups include, but are not limited to, R, OR, COR, COOR, OCOR, carboxylate salts such as COOLi, COONa, COOK, COO⁻NR₄+, halogen, CN, NR₂, SO₃H, sulfonate salts such as SO₃Li, SO₃Na, SO₃K, SO₃⁻ NR₄⁺, OSO₃H, OSO₃⁻salts, NR(COR), CONR₂, NO₂, PO₃H₂, phosphonate salts such as PO₃HNa and PO₃Na₂, phosphate salts such as OPO₃HNa and OPO₃Na₂, N=NR, NR₃⁺X⁻, PR₃⁺X⁻, SₖR, SSO₃H, SSO₃⁻salts, SO₂NRR', SO₂SR, SNRR', SNQ, SO₂NQ, CO₂NQ, S-(1,4-piperazinediyl)-SR, 2-(1,3-dithianyl) 2-(1,3-dithiolanyl), SOR, and SO₂R. R and R', which can be the same or different, are independently hydrogen, branched or unbranched C₁-C₂₀ substituted or unsubstituted, saturated or unsaturated hydrocarbon, e.g., alkyl, alkenyl, alkynyl, substituted or unsubstituted aryl, substituted or unsubstituted heteroaryl, substituted or unsubstituted alkylaryl, or substituted or unsubstituted arylalkyl. The integer k ranges from 1-8 and preferably from 2-4. The anion X⁻ is a halide or an anion derived from a mineral or organic acid. Q is (CH₂)_{w}, (CH₂)ₓO(CH₂)_{z}, (CH₂)ₓNR(CH₂)_{z}, or (CH₂)ₓS(CH₂)_{z}, where w is an integer from 2 to 6 and x and z are integers from 1 to 6.

A preferred organic group is an aromatic group of the formula A_{y}Ar-, which corresponds to a primary amine of the formula A_{y}ArNH₂. In this formula, the variables have the following meanings: Ar is an aromatic radical such as an aryl or heteroaryl group. Preferably, Ar is selected from the group consisting of phenyl, naphthyl, anthracenyl, phenanthrenyl, biphenyl, pyridinyl, benzothiadiazolyl, and benzothiazolyl; A is a substituent on the aromatic radical independently selected from a preferred functional group desribed above or A is a linear, branched or cyclic hydrocarbon radical (preferably containing 1 bis 20 carbon atoms), unsubstituted or substituted with one or more of those functinal groups; and y is an integer from 1 to the total number of -CH radicals in the aromatic radical. For instance, y is an integer from 1 to 5 when Ar is phenyl, 1 to 7 when Ar is naphthyl, 1 to 9 when Ar is anthracenyl, phenanthrenyl, or biphenyl, or 1 to 4 when Ar is pyridinyl.

In the above formula, specific examples of R and R' are NH₂-C₆H₄-, CH₂CH₂-C₆H₄-NH₂, CH₂-C₆H₄-NH₂, and C₆H₅.

Another preferred set of organic groups which may be attached to the carbon black are organic groups substituted with an ionic or an ionizable group as a functional group. An ionizable group is one which is capable of forming an ionic group in the medium of use. The ionic group may be an anionic group or a cationic group and the ionizable group may form an anion or a cation.

Ionizable functional groups forming anions include, for example, acidic groups or salts of acidic groups. The organic groups, therefore, include groups derived from organic acids. Preferably, when it contains an ionizable group forming an anion, such an organic group has a) an aromatic group and b) at least one acidic group having a pKa of less than 11, or at least one salt of an acidic group having a pKa of less than 11, or a mixture of at least one acidic group having a pKa of less than 11 and at least one salt of an acidic group having a pKa of less than 11. The pKa of the acidic group refers to the pKa of the organic group as a whole, not just the acidic substituent. More preferably, the pKa is less than 10 and most preferably less than 9. Preferably, the aromatic group of the organic group is directly attached to the carbon black. The aromatic group may be further substituted or unsubstituted, for example, with alkyl groups. More preferably, the organic group is a phenyl or a naphthyl group and the acidic group is a sulfonic acid group, a sulfinic acid group, a phosphonic acid group, or a carboxylic acid group. Examples of these acidic groups and their salts are discussed above. Most preferably, the organic group is a substituted or unsubstituted sulfophenyl group or a salt thereof; a substituted or unsubstituted (polysulfo)phenyl group or a salt thereof; a substituted or unsubstituted sulfonaphthyl group or a salt thereof; or a substituted or unsubstituted (polysulfo)naphthyl group or a salt hereof. A preffered substituted sulfophenyl group is hydroxysulfophenyl group or a salt thereof.

Specific organic groups having an ionizable functional group forming an anion (and their corresponding primary amines) are p-sulfophenyl (p-sulfanilic acid), 4-hydroxy-3-sulfophenyl (2-hydroxy-5-amino-benzenesulfonic acid), and 2-sulfoethyl (2-aminoethanesulfonic acid). Other organic groups having ionizable functional groups forming anions can also be used.

Amines represent examples of ionizable functional groups that form cationic groups. For example, amines may be protonated to form ammonium groups in acidic media. Preferably, an organic group having a amine substituent has a pKb of less than 5. Quaternary ammonium groups (-NR₃⁺) and quaternary phosphonium groups (-PR₃⁺) also represent examples of cationic groups. Preferably, the organic group contains an aromatic group such as a phenyl or a naphthyl group and a quaternary ammonium or a quaternary phosphonium group. The aromatic group is preferably directly attached to the carbon black. Quaternized cyclic amines, and even quaternized aromatic amines, can also be used as the organic group. Thus, N-substituted pyridinium compounds, such as N-methyl-pyridyl, can be used in this regard. Examples of organic groups include, but are not limited to, (C₅H₄N)C₂H₅⁺, C₆H₄(NC₅H₅)⁺, C₆H₄COCH₂N(CH₃)₃⁺, C₆H₄COCH₂(NC₅H₅)⁺, (C₅H₄N)CH₃⁺, and C₆H₄CH₂N(CH₃)₃⁺.

An advantage of the carbon black products having an attached organic group substituted with an ionic or an ionizable group is that the carbon black product may have increased water dispersibility relative to the corresponding untreated carbon black. Water dispersibility of a carbon black product increases with the number of organic groups attached to the carbon black having an ionizable group or the number of ionizable groups attached to a given organic group. Thus, increasing the number of ionizable groups associated with the carbon black product should increase its water dispersibility and permits control of the water dispersibility to a desired level. It can be noted that the water dispersibility of a carbon black product containing an amine as the organic group attached to the carbon black may be increased by acidifying the aqueous medium.

Because the water dispersibility of the carbon black products depends to some extent on charge stabilization, it is preferable that the ionic strength of the aqueous medium be less than 0.1 molar. More preferably, the ionic strength is less than 0.01 molar.

When such a water dispersible carbon black product is prepared, it is preferred that the ionic or ionizable groups be ionized in the reaction medium. The resulting product solution or slurry may be used as is or diluted prior to use. Alternatively, the carbon black product may be dried by techniques used for conventional carbon blacks. These techniques include, but are not limited to, drying in ovens and rotary kilns. Overdrying, however, may cause a loss in the degree of water dispersibility.

In addition to their water dispersibility, carbon black products having an organic group substituted with an ionic or an ionizable group may also be dispersible in polar organic solvents such as dimethylsulfoxide (DMSO), and formamide. In alcohols such as methanol or ethanol, use of complexing agents such as crown ethers increases the dispersibility of carbon black products having an organic group containing a metal salt of an acidic group.

Aromatic sulfides encompass another group of preferred organic groups. Carbon black products having aromatic sulfide groups are particularly useful in rubber compositons. These aromatic sulfides can be represented by the formulas Ar (CH₂)_{q}Sₖ(CH₂)ᵣAr' or A-(CH₂)_{q}Sₖ(CH₂)ᵣAr" wherein Ar and Ar' are independently substituted or unsubstituted arylene or heteroarylene groups, Ar"is an aryl or heteroaryl group, k is 1 to 8 and q and r are 0-4. Substituted aryl groups would include substituted alkylaryl groups. Preferred arylene groups include phenylene groups, particularly p-phenylene groups, or benzothiazolylene groups. Preferred aryl groups include phenyl, naphthyl and benzothiazolyl. The number of sulfurs present, defined by k preferably ranges from 2 to 4. Preferred carbon black products are those having an attached aromatic sulfide organic group of the formula-(C₆H₄)-Sₖ-(C₆H₄)-, where k is an integer from 1 to 8, and more preferably where k ranges from 2 to 4. Particularly preferred aromatic sulfide groups are bis-para- (C₆H₄)-S₂-(C₆H₄)- and para-(C₆H₄)-S₂-(C₆H₅). The diazonium salts of these aromatic sulfide groups may be conveniently prepared from their corresponding primary amines, H₂N-Ar-Sₖ-Ar'-NH₂ or H₂N-Ar-Sₖ-Ar". Preferred groups include dithiodi-4,1-phenylene, tetrathiodi-4,1-phenylene, phenyldithiopenylene, dithiodi-4,1-(3-chlorophenylene),-(4-C₆H₄)-S-S-(2-C₇H₄NS), -(4-C₆H₄)-S-S-(4-C₆H₄)-OH, -6-(2-C₇H₃NS)-SH, -(4-C₆H₄)-CH₂CH₂-S-S-CH₂CH₂-(4-C₆H₄)-, -(4-C₆H₄)-CH₂CH₂-S-S-S-CH₂CH₂-(4-C₆H₄)-, -(2-C₆H₄)-S-S-(2-C₆H₄)-, (3-C₆H₄)-S-S-(3-C₆H₄) -, -6-(C₆H₃N₂S), -6-(2-C₇H₃NS)S-NRR' where RR' is -CH₂CH₂OCH₂CH₂-, -(4-C₆H₄)-S-S-S-S-(4-C₆H₄)-, -(4-C₆H₄)-CH=CH₂, -(4-C₆H₄)-S-SO₃H, -(4-C₆H₄)-SO₂NH-(4-C₆H₄)-S-S-(4-C₆H₄)-NHSO₂-(4-C₆H₄)-, -6-(2-C₇H₃NS)-S-S-2-(6-C₇H₃NS),-(4-C₆H₄)-S-CH₂-(4-C₆H₄) -, -(4-C₆H₄)-SO₂-S-(4-C₆H₄)-, -(4-C₆H₄)-CH₂-S-CH₂-(4-C₆H₄)-, -(3-C₆H₄)-CH₂-S-CH₂-(3-C₆H₄)-, - (4-C₆H₄)-CH₂-S-S-CH₂-(4-C₆H₄)-, - (3-C₆H₄)-CH₂-S-S-CH₂-(3-C₆H₄)-, -(4-C₆H₄)-S-NRR' where RR' is -CH₂CH₂OCH₂CH₂-, - (4-C₆H₄)-SO₂NH-CH₂CH₂-S-S-CH₂CH₂-NHSO₂-(4-C₆H₄)-, -(4-C₆H₄) -2-(1,3-dithianyl;), and-(4-C₆H₄)-S-(1,4-piperizinediyl)-S-(4-C₆H₄)-.

Another preferred set of organic groups which may be attached to the carbon black are organic groups having an aminophenyl, such as (C₆H₄)-NH₂, (C₆H₄)-CH₂(C₆H₄)-NH₂, (C₆H₄)-SO₂-(C₆H₄)-NH₂. Preferred organic groups also include aromatic sulfides, represented by the formulas Ar-Sₙ-Ar' or Ar-Sₙ-Ar", wherein Ar and Ar' are independently arylene groups, Ar" is an aryl and n is 1 to 8. Methods for attaching such organic groups to carbon black are discussed in U.S. patent applications serial nos. 08/356,660, 08/572,525, and 08/356,459, the disclosures of which are fully incorporated by reference herein.

Furthermore, it is within the bounds of this application to also use a mixture of silica and rare earths-treated carbon black. Also, any combination of additional components with the rare earths-treated carbon black may be used such as one or more of the following:
a) rare earths-treated carbon black with an attached organic group, optionally treated with silane coupling agents ;
b) silica;
c) modified silica, for example, having an attached organic group;
   and/or
d) other inorganic fillers and their chemically modified derivatives;
e) carbon black; and/or
f) modified carbon black having an attached organic group;
g) silicon-treated carbon black, optionally having attached organic groups.

Examples of silica include, but are not limited to, silica, precipitated silica, amorphous silica, vitreous silica, fumed silica, fused silica, silicates (e.g., alumina silicates) and other Si containing fillers such as clay, talc, wollastonite, etc. Silicas are commercially available from such sources as Cabot Corporation under the Cab-O-Sil® tradename; PPG Industries under the Hi-Sil and Ceptane tradenames; Rhone-Poulenc under the Zeosil tradename; and Degussa-Hüls AG under the Ultrasil and Coupsil tradenames.

The elastomeric compounds of the present invention may be prepared from the treated carbon blacks by compounding with any elastomer including those useful for compounding a carbon black.

Any suitable elastomer may be compounded with the metal-treated carbon blacks to provide the elastomeric compounds of the present invention. Such elastomers include, but are not limited to, rubbers, homo- or co-polymers of 1,3-butadiene, styrene, isoprene, isobutylene, 2,3-dimethyl-1,3-butadiene, acrylonitrile, ethylene, and propylene. Preferably, the elastomer has a glass transition temperature (Tg) as measured by differential scanning colorimetry (DSC) ranging from about -120°C to about 0°C. Examples include, but are not limited, styrene-butadiene rubber (SBR), natural rubber, polybutadiene, polyiosprene, and their oil-extended derivatives. Blends of any of the foregoing may also be used.

Among the rubbers suitable for use with the present invention are natural rubber and is derivatives such as chlorinated rubber. The rare earths-treated carbon black products of the invention may also be used with synthetic rubbers such as: copolymers of from about 10 to about 70 percent by weight of styrene and from about 30 to about 90 percent by weight of butadiene such as copolymer of 19 parts styrene and 81 parts butadiene, a copolymer of 30 parts styrene and 70 parts butadiene, a copolymer of 43 parts styrene and 57 parts butadiene and a copolymer of 50 parts styrene and 50 parts butadiene; polymers and copolymers of conjugated dienes such as polybutadiene, polyisoprene, polychloroprene, and the like, and copolymers of such conjugated dienes with an ethylenic group-containing monomer copolymerizable therewith such as styrene, methyl styrene, chlorostyrene, acrylonitrile, 2-vinyl-pyridine, 5-methyl 2-vinylpyridine, 5-ethyl-2-vinylpyridine, 2-methyl-5-vinylpyridine, alkyl-substituted acrylates, vinyl ketone, methyl isopropenyl ketone, methyl vinyl ether, alphamethylene carboxylic acids and the esters and amides thereof such as acrylic acid and dialkylacrylic acid amide; also suitable for use herein are copolymers of ethylene and other high alpha olefins such as propylene, butene-1 and pentene-1.

The rubber compositions of the present invention can therefore contain an elastomer, curing agents, reinforcing filler, a coupling agent, and, optionally, various processing aids, oil extenders, and antidegradents. In addition to the examples mentioned above, the elastomer can be, but is not limited to, polymers (e.g., homopolymers, copolymers, and terpolymers) manufactured from 1,3 butadiene, styrene, isoprene, isobutylene, 2,3-ditmethyl-1,3 butadiene, acrylonitrile, ethylene, propylene, and the like. It is preferred that these elastomers have a glass transition point (Tg), as measured by DSC, between -120°C and 0°C. Examples of such elastomers include poly(butadiene), poly(styrene-co-butadiene), and poly(isoprene).

Elastomeric compositions also include vulcanized compositions (VR), thermoplastic vulcanizates (TPV), thermoplastic elastomers (TPE) and thermoplastic polyolefins (TPO). TPV, TPE, and TPO materials are further classified by their ability to be extruded and molded several times without loss of performance characteristics.

In making the elastomeric compositions, one or more curing agents such as, for example, sulfur, sulfur donors, activators, accelerators, peroxides, and other systems used to effect vulcanization of the elastomer composition may be used.

Formulation of the rare earths-treated carbon blacks of the present invention with elastomers are contemplated to have advantages not realized when such elastomers are formulated with conventional carbon blacks.

## Claims

1. An elastomeric compound comprising an elastomer and an aggregate comprising a carbon phase and a rare earths-containing species phase.

2. The elastomeric compound of claim 1, wherein said rare earths-containing species comprises a scandium-containing species phase, a yttrium-containing species phase, a lanthanum-containing species phase, a cerium-containing species phase, a praseodymium-containing species phase, a promethium -containing species phase, a samarium-containing species phase, a europium-containing species phase, an gadolinium-containing species phase, a terbium-containing species phase, a dysprosium-containing species phase, a holmiumcontaining species phase, a erbium-containing species phase, a thulium-containing species phase, a ytterbium-containing species phase, an lutetium-containing species phase, or mixtures thereof.

3. The elastomeric compound of claim 1, further comprising a coupling agent.

4. The elastomeric compound of claim 1, wherein said rare earths-containing species phase exists primarily at the surface of the aggregate.

5. The elastomeric compound of claim 1, wherein said rare earths-containing species phase is oxidized.

6. The elastomeric compound of claim 1, wherein at least a portion of said aggregate has an organic group attached thereto, and optionally treated with a silane coupling agent.

7. The elastomeric compound of claim 1 wherein said metal-containing species phase comprises from about 0,1 % to about 25 % elemental metal, by weight of said aggregate.

8. A method for preparing an aggregate comprising a carbon phase and at least one rare earths-containing species phase comprising:
introducing at least one decomposible or volatalizable rare earths-containing compound into a reactor along with a carbon black feed stock or during the formation of carbon black at a sufficient temperature to decompose or volatilize said compound and form an aggregate comprising a carbon phase and at least one rare earths-containing species phase.

9. The method of claim 8, wherein said rare earths-containing species phase comprises a scandium-containing species phase, yttrium-containing species phase, a lanthanum-containing species phase, a cerium-containing species phase, a praseodymium-containing species phase, a promethium-containing species phase, a samarium-containing species phase, a europium-containing species phase, an gadolinium-containing species phase, a terbium-containing species phase, a dysprosium-containing species phase, a holmium-containing species phase, a erbium-containing species phase, a thulium-containing species phase, a ytterbium-containing species phase, a lutetium-containing species phase, or mixtures thereof.

10. The method of claim 8, wherein said rare earths-containing species phase exists primarily at the surface of the aggregate.

11. The method of claim 8, wherein said rare earths-containing species phase is oxidized.

12. The method of claim 8, wherein said rare earths-containing species phase comprises from about 0.1 % to about 25 % elemental rare earths, by weight of said aggregate.

13. A method of preparing an elastomeric compound, comprising: masticating and mixing in a mixer, an aggregate comprising a carbon phase and a rare earths-containing species phase and an elastomer, and
optionally a coupling agent, for a time and temperature sufficient to form a masterbatch;
milling said masterbatch;
cooling said masterbatch to facilitate the addition of a curing additive and avoid substantial premature cross-linking;
masticating and mixing in a mixer a mixture comprising the masterbatch and a curing additive, and optionally a coupling agent, for a time and temperature sufficient to form said elastomeric compound.

14. The method of claim 13, wherein said rare earths-containing species phase exists primarily at the surface of the aggregate.

15. The method of claim 13, wherein said rare earths-containing species is oxidized.

16. The method of claim 13, wherein said rare earths-containing species phase comprises from about 0.1 % to about 25 % elemental rare earths, by weight of said aggregate.

17. The method of claim 13, wherein said coupling agent comprises a silane coupling agent, a zirconate coupling agent, a titanate coupling agent, a nitro coupling agent or a mixture thereof.

18. An aggregate comprising a carbon phase and at least one rare earths-containing species phase.

19. The aggregate of claim 18, wherein said rare earths-containing species phase comprises a scandium-containing species phase, a yttrium-containing species phase, a lanthanum-containing species phase, a cerium-containing species phase, a praseodymium-containing species phase, a promethium-containing species phase, a samarium-containing species phase, a europium-containing species phase, an gadolinium-containing species phase, a terbium-containing species phase, a dysprosium-containing species phase, a holmium-containing species phase, a erbium-containing species phase, a thulium-containing species phase, a ytterbium-containing species phase, a lutetium-containing species phase, or mixtures thereof.

20. The aggregate of claim 18, wherein said rare earths-containing species phase exists primarily at the surface of the aggregate.

21. The aggregate of claim 18, wherein said rare earths-containing species phase is oxidized.

22. The aggregate of claim 18, wherein said rare earths-containing species phase comprises from about 0.1 % to about 25 % elemental rare earths, by weight of said aggregate.

23. The aggregate of claim 18, further comprising a silicon-containing species phase.

24. The elastomeric compound of claim 1, wherein said aggregate further comprises a silicon-containing species phase.

25. The elastomeric compound of claim 1, wherein said aggregate comprises at least two different rare earths -containing species phases.

26. The elastomeric compound of claim 1, wherein said aggregate further comprises a boron-containing species phase.

27. The aggregate of claim 18, wherein said aggregate comprises at least two rare earths-containing phases.

28. The aggregate of claim 18, further comprising a boron-containing species phase.

29. A method to improve hysteresis of an elastomeric compound comprising the introduction of an aggregate of claim 18 into the elastomeric compound.

30. A method to improve the abrasion resistance of an elastomeric compound comprising the introduction of an aggregate of claim 18 into the elastomeric compound.

31. A method to improve the wet skid resistance of wet traction of an elastomeric compound comprising the introduction of an aggregate of claim 18 into the elastomeric compound.

32. A method to improve traction of an elastomeric compound comprising the introduction of an aggregate of claim 18 into the elastomeric compound.
